Europäisches Patentamt

European Patent Office

Office européen des brevets

(19)

(11) Numéro de publication : **0 338 381 B1**

(12) # FASCICULE DE BREVET EUROPEEN

(45) Date de publication du fascicule du brevet :
05.08.92 Bulletin 92/32

(51) Int. Cl.⁵ : **G01B 7/02**, G01B 7/14,
G01D 5/14

(21) Numéro de dépôt : **89106367.9**

(22) Date de dépôt : **11.04.89**

(54) **Capteur de position.**

(30) Priorité : **18.04.88 FR 8805078**

(43) Date de publication de la demande :
**25.10.89 Bulletin 89/43**

(45) Mention de la délivrance du brevet :
**05.08.92 Bulletin 92/32**

(84) Etats contractants désignés :
**AT BE CH DE ES FR GB IT LI NL SE**

(56) Documents cités :
**DE-A- 2 226 101
DE-B- 1 208 897
US-A- 3 849 724
PATENT ABSTRACTS OF JAPAN, vol. 7, no. 18
(P-170)[1163], 25 janvier 1983; & JP-A-57 173
701 (NIPPON KOKUYU TETSUDO)26-10-1982
ETZ-A, vol. 83, no. 11, 21 mai 1962, pages
367-372; H.J. LIPPMANN: "Kontaktloser
Signalgeber mit berührungsloser Betätigungdurch Eisenteile"**

(73) Titulaire : **GEC ALSTHOM SA
38, avenue Kléber
F-75116 Paris (FR)**
Titulaire : **INSTITUT NATIONAL DE
RECHERCHE SUR LES TRANSPORTS ET
LEUR SECURITE
2 Avenue du Général Malleret-Joinville
F-94114 Arcueil (FR)**

(72) Inventeur : **Maupu, Jean-Louis I.N.R.E.T.S.
2, avenue du Général Malleret Joinville
F-94114 Arcueil Cedex (FR)**
Inventeur : **Chollet, Hugues I.N.R.E.T.S.
2, avenue du Général Malleret Joinville
F-94114 Arcueil Cedex (FR)**
Inventeur : **Caroff, Pierre I.N.R.E.T.S.
2, avenue du Général Malleret Joinville
F-94114 Arcueil Cedex (FR)**
Inventeur : **Duhot, Denis
62, rue Tiquetonne
F-75002 Paris (FR)**

(74) Mandataire : **Weinmiller, Jürgen et al
Lennéstrasse 9 Postfach 24
W-8133 Feldafing (DE)**

EP 0 338 381 B1

## Description

La présente invention concerne un capteur de position utilisable notamment pour détecter la position d'un essieu de véhicule ferroviaire par rapport à un rail de la voie ferrée.

Il a été proposé de détecter l'approche d'une première pièce métallique par rapport à une seconde pièce fixe en observant les déformations d'un champ magnétique, lié à la seconde pièce, lors de l'approche de la pièce métallique.

Une telle détection est faite avantageusement au moyen de sonde à effet Hall.

On se référera utilement à cet égard au document ETZ-A, vol 83 n° 11, 21 mai 1962 pages 367-372. (CH.J. LIPPMANN).

L'application à la détection de position d'un essieu de véhicule par rapport à un rail n'est pas immédiate, car la hauteur de la sonde, si celle-ci est liée à l'essieu, n'est pas constante par rapport au rail en raison des mouvements du véhicule.

Un but de l'invention est de réaliser un capteur dont le signal de mesure est indépendant de la hauteur de laquelle est placée la sonde.

Un autre but de l'invention est de réaliser un capteur dont le signal de mesure n'est pas perturbé par le courant de retour qui circule dans la voie ferrée.

L'invention a pour objet un capteur de position destiné à mesurer l'écart de position, selon une direction donnée, d'une première pièce telle qu'un élément donné d'un essieu de véhicule ferroviaire par rapport à une seconde pièce fixe tel qu'un rail sur lequel circule ledit essieu, comprenant des moyens pour élaborer au-dessus de ladite seconde pièce un champ magnétique dont les lignes de force sont verticales et perpendiculaires à ladite direction caractérisé par des sondes à effet Hall comme dans les revendications 1 et 2.

Un mode préféré de réalisation de l'invention est décrit maintenant en référence au dessin annexé dans lequel :

– la figure 1 est une représentation graphique des lignes de force d'un champ magnétique produit par un solénoïde,

– la figure 2 est une représentation graphique du même champ en présence de la masse métallique constituée par un rail de chemin de fer,

– la figure 3 est une représentation graphique de la composante selon une direction perpendiculaire au rail du champ de la figure 2,

– la figure 4 est une vue en perspective d'un rail muni d'aimants pour élaborer un champ perpendiculaire au rail,

– les figures 5, 6 et 7 sont des vues schématiques respectivement en élévation, en bout et de dessus montrant les dispositions des aimants et des sondes du capteur par rapport au rail,

– la figure 8 est une vue en perspective d'un rail avec une autre disposition des aimants,

– la figure 9 est une vue en coupe par un plan perpendiculaire au rail de l'ensemble de la figure 8,

– la figure 10 montre le même ensemble en élévation,

– la figure 11 est un schéma électronique du montage à "champ nul" des sondes à effet Hall utilisées dans le capteur selon l'invention,

– la figure 12 est une vue en élévation en coupe d'un capteur selon un mode de réalisation.

L'invention est fondée sur l'observation des déformations que subit un champ magnétique uniforme de direction Oz perpendiculaire au plan de la voie, dans une direction Oy parallèle au plan de la voie, et perpendiculaire à la voie, en raison de la présence du rail.

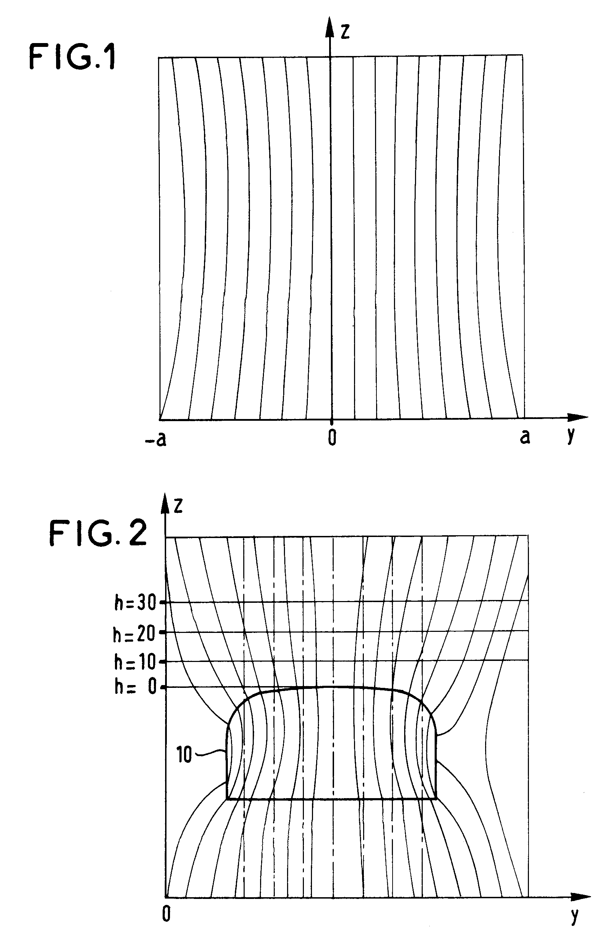

Si on observe par exemple les lignes de force d'un champ magnétique créé par un solénoïde d'axe Oz (figure 1), on constate qu'elles ont la forme de droites parallèles à Oz, sauf au voisinage des parois d'abscisses + a et-a du solénoïde.

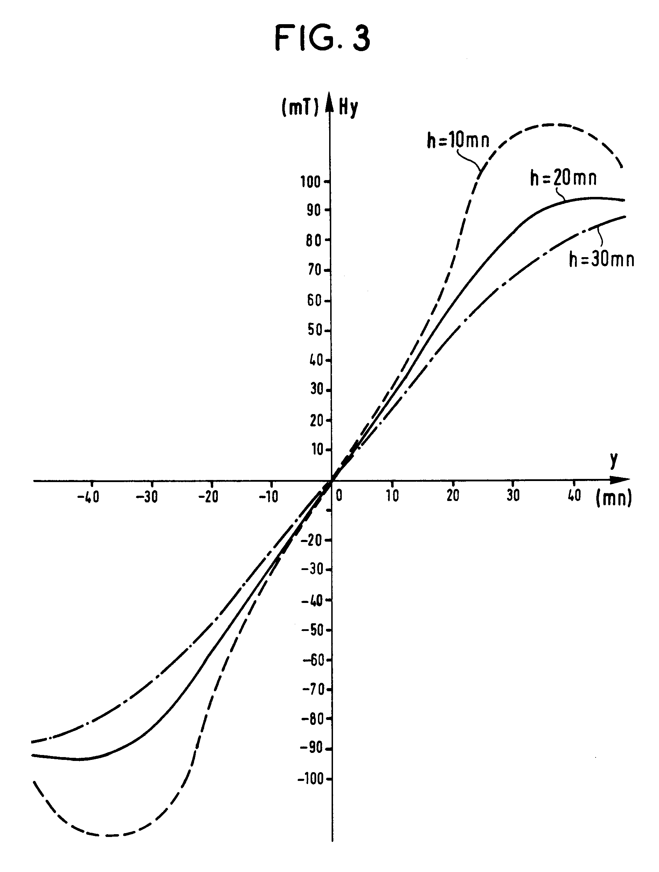

Si la direction Oz est une direction perpendiculaire au plan d'une voie et contenue dans le plan vertical de symétrie d'un rail, on constate que la présence de la masse métallique constituée par un rail 10 dans le champ magnétique de la figure 1 provoque une déformation des lignes de force ; une représentation en est donnée dans la figure 2.

Si l'on observe (figure 3) la représentation graphique des variations de la composante Hy selon Oy du champ magnétique en fonction de la distance au plan de symétrie du rail, on constate qu'en se plaçant à une hauteur h donnée au dessus du rail, les variations de la composante Hy du champ sont linéaires sur une distance de plusieurs centimètres. Dans la figure 3, on a tracé les courbes Hy (y) pour h = 10, 20 et 30 mm et on constate une linéarité sur une distance selon Oy comprise entre -30 et + 30 mm.

Dans cette fourchette, il est donc possible d'écrire Hy = k.y où k est un facteur dépendant, entre autres, de la hauteur par rapport à la partie supérieure du rail.

On observe également qu'il existe des points liés aux aimants où la variation de la composante Hx du champ est linéaire en fonction du déplacement selon Ox des aimants par rapport au rail.

C'est sur la base de ces considérations qu'est fondée l'invention. Le capteur de l'invention comprend un moyen pour élaborer un champ magnétique qui serait sensiblement perpendiculaire au plan de la voie en l'absence de rail, et des moyens pour mesurer les variations de sa composante selon une direction à une distance donnée au dessus du rail. Les moyens de mesure comprennent une sonde à effet Hall.

Dans une application à la mesure de la position d'un essieu de véhicule ferroviaire, il est impossible de maintenir en permanence une sonde à une hauteur h bien définie du rail, car l'essieu est soumis à des déplacements verticaux par rapport au rail. Pour obtenir une mesure indépendante de la hauteur on place deux sondes à effet Hall, assujetties à rester à la même distance horizontale d l'un de l'autre et placées, en l'absence de mouvement de l'essieu, à la même hauteur au-dessus du rail.

Si la première sonde est, à un instant donné, placée à une abscisse a, elle mesure un champs H1 = ka.

La seconde sonde mesure H2 = k (a - d).

Si un circuit élabore un signal,

$$S \ = \ \frac{H1 \ + \ H2}{H1 - H2} = \ \frac{k}{k} \ \frac{2a - d}{d} = \ \frac{2a - d}{d},$$

on voit que ce signal est indépendant de k et donc de la hauteur. Conformément à une caractéristique de l'invention le capteur de l'invention comprend donc avantageusement deux sondes placées à une distance horizontale fixe l'une de l'autre et à la même hauteur au-dessus du rail et un circuit d'établissement du rapport de la somme à la différence des signaux émis par ces sondes.

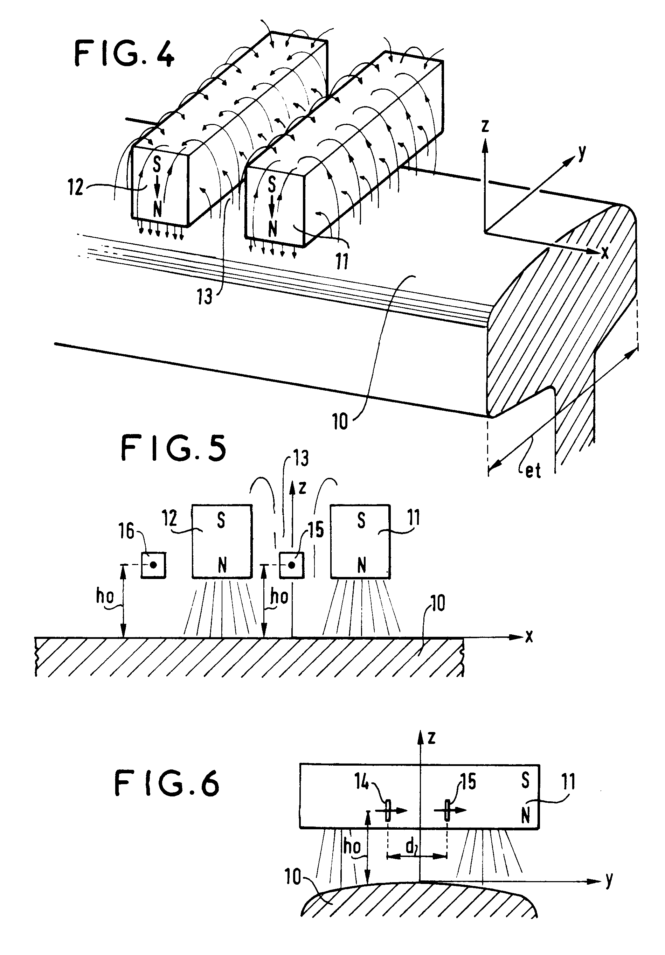

La figure 4 représente un rail 10 d'axe Ox. L'axe Oz est une verticale dirigée vers le haut. L'axe Oy est un axe transversal perpendiculaire à Oz et Ox.

Dans un premier mode de réalisation, le champ magnétique est créé par deux barreaux 11 et 12, parallèles, dont la grande longueur est dirigée selon l'axe Oy et aimantés NS selon l'axe Oz, de telle sorte que dans l'espace 13 compris entre les aimants, le champ soit uniforme et vertical.

Pour mesurer les variations de la composante horizontale du champ, deux sondes à effet Hall 14 et 15 sont placées dans l'espace 13, leur plan étant parallèle au plan zOy. Elles sont situées à une distance ho du rail et séparées entre elles par une distance d.

Si V1 et V2 sont les tensions de Hall obtenues en leur injectant un courant de contrôle donné, on a vu que la mesure de la composante selon Oy du champ magnétique, donc l'écart de position recherché, est obtenue sans influence de la hauteur des sondes au-dessus des rails en élaborant un signal

$$S1 \ = \ \frac{V1 \ + \ V2}{V1 - V2}.$$

En général, le rail est utilisé pour le retour du courant de traction des véhicules ferroviaires ; il génère donc dans les sondes 13 et 14 un signal parasite.

Cet inconvénient est supprimé en équipant le capteur d'une troisième sonde à effet Hall, 16, placée loin de l'influence des aimants 11 et 12, à une même hauteur ho au dessus du rail que les sondes 14 et 15.

Si V3 est le signal détecté par la sonde 16, le circuit électronique du capteur de l'invention élaborera un signal corrigé S3 tel que

$$S3 \ = \ \frac{V1 \ + \ V2 - 2 \, V3}{V1 - V2}$$

On notera que pour des applications où on n'utiliserait qu'une seule sonde soumise au champ magnétique, (par exemple parce que la hauteur de la sonde ne varierait pas) on pourrait utiliser une sonde de compensation fournissant un signal Vc et on élaborerait un signal

S2 = V1 - Vc proportionnel à la composante recherchée.

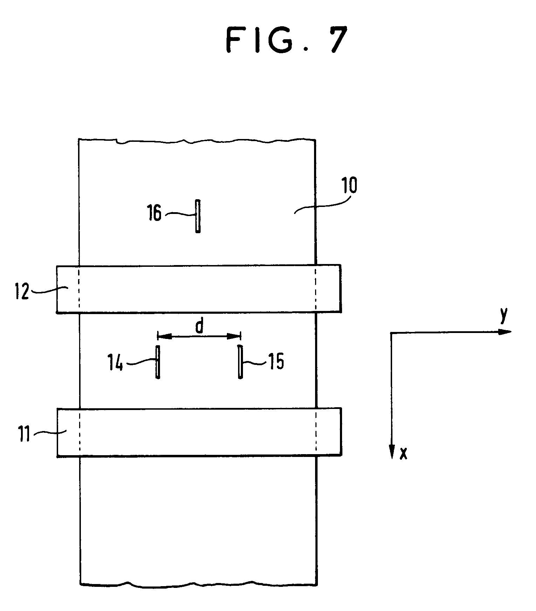

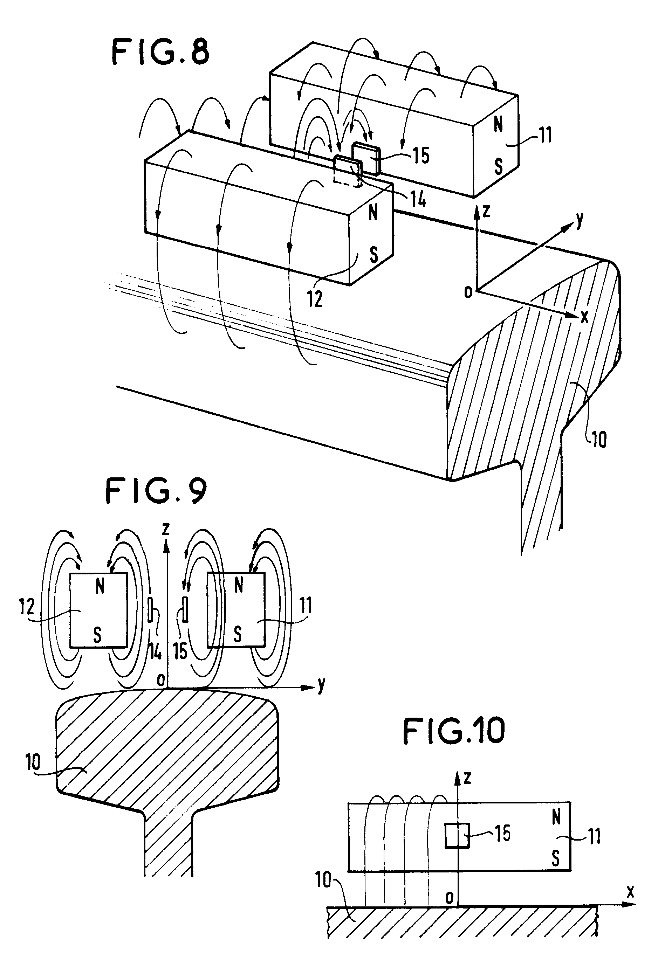

Les figures 8 à 10 illustrent une variante de la disposition des aimants par rapport au rail. Les éléments communs à ces figures et aux figures 4 à 7 ont reçu les mêmes numéros de référence.

Cette fois, les aimants 11 et 12 sont des barreaux dont la plus grande dimension est parallèle au rail 10 (direction Ox) ; ils sont aimantés NS selon la direction verticale Os. Les sondes de Hall 14 et 15 ont des plans parallèles au plan vertical parallèle au rail (plan zOx).

Pour de multiples raisons bien connues, il est préférable de faire travailler à champ nul les sondes à effet Hall.

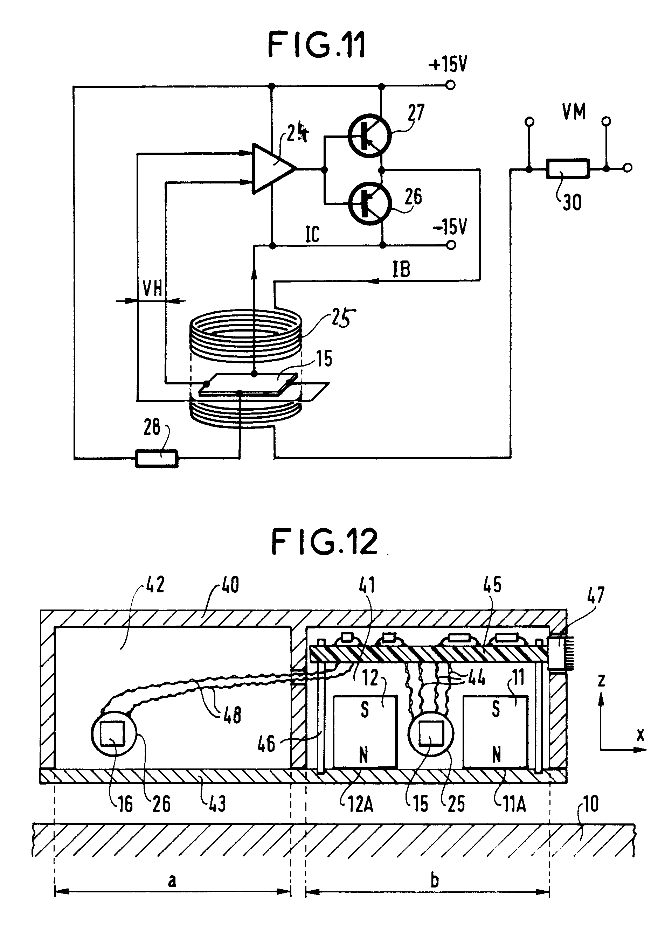

C'est pourquoi les sondes à effet Hall 14, 15 et 16 sont associées à un circuit électronique tel que celui décrit en référence à la figure 11.

La sonde 15, par exemple, est placée à l'intérieur d'une bobine 25 créant un champ parallèle au champ Hy mesuré et de sens opposé.

Cette bobine est alimentée par un courant IB élaboré à partir de la tension de Hall VH de la sonde 14 appliqué aux entrées d'un amplificateur opérationnel 24 suivi d'un étage à transistors 26 et 27.

Le champ de la bobine compense donc à chaque instant celui à mesurer et annule la tension de Hall.

Le courant de contrôle Ic traversant la sonde à effet Hall est élaboré par un circuit comprenant une source continue, par exemple - 15V, + 15V et une résistance d'ajustage 28. La source sert à polariser l'amplificateur et les transistors.

Le signal recherché proportionnel au courant IB de la bobine 25, est prélevé aux bornes d'une résistance 30 sous forme d'une tension VM.

La figure 12 représente, en coupe un capteur de position selon un mode de réalisation particulièrement compact.

Il comprend un boîtier 40, à deux compartiments 41 et 42, réalisé en matériau magnétique tel que du fer. Le boîtier est fermé à sa partie inférieure par une semelle 43 en matériau amagnétique ; tel que de l'acier inoxydable.

Dans le compartiment 41 sont placés les aimants 11 et 12, fixés de préférence par une couche de colle respectivement 11A et 12A sur la semelle 43.

Le compartiment 41 contient également les deux sondes 14 et 15 et leur bobine associée.

Seule la sonde 15 et sa bobine 25 sont visibles dans la figure 12.

Les sondes et les bobines sont reliées par des connexions telles que 44 à un circuit électronique placé sur un plaque imprimée 45 fixée à la semelle 43 par des tiges telle que 46. Un bornier de sortie 47 permet de transmettre les informations et signaux à un circuit d'utilisation extérieur.

Le compartiment 42 renferme la sonde de compensation 16 et sa bobine associée 26, reliées par des connexions 48 au circuit électronique.

Les sondes et bobines sont avantageusement maintenues en position fixe en remplissant les compartiments 41 et 42 d'un résine isolante durcissable.

## Revendications

1. Capteur de position destiné à mesurer l'écart de position, selon une direction donnée, d'une première pièce telle qu'un élément donné d'un essieu de véhicule ferroviaire par rapport à une seconde pièce fixe tel qu'un rail sur lequel circule ledit essieu, comprenant des moyens pour élaborer au-dessus de ladite seconde pièce un champ magnétique dont les lignes de champ sont, lorsque ledit écart est nul, sensiblement perpendiculaires à ladite direction, caractérisé en ce qu'il comprend deux sondes à effet Hall (14, 15), solidaires de la première pièce et dont les plans sont perpendiculaires à ladite direction (Oy), disposées à une distance fixe (d) l'une de l'autre et à la même hauteur (ho) par rapport à ladite seconde pièce, et parcourues par un courant de contrôle identique, ledit capteur comprenant en outre un circuit élaborant un signal

$$S1 = (V1 + V2)/(V1 - V2)$$

où V1 et V2 sont les tensions de Hall respectives desdites sondes, ledit signal S1 étant proportionnel audit écart de position.

2. Capteur de position destiné à mesurer l'écart de position, selon une direction donnée, d'une première pièce telle qu'un élément donné d'un essieu de véhicule ferroviaire par rapport à une seconde pièce fixe tel qu'un rail sur lequel circule ledit essieu, comprenant des moyens pour élaborer au-dessus de ladite seconde pièce un champ magnétique dont les lignes de champ sont, lorsque ledit écart est nul, sensiblement perpendiculaires à ladite direction, caractérisé en ce qu'il comprend une première et une seconde sondes à effet Hall (14, 15), solidaires de la première pièce et dont les plans sont perpendiculaires à ladite direction (Oy), disposées à une distance fixe (d) l'une de l'autre et à la même hauteur (ho) par rapport à ladite seconde pièce, et parcourues par un courant de contrôle identique, et une troisième sonde à effet Hall (16) solidaire de ladite première pièce, placée hors de l'effet dudit champ magnétique, à une même hauteur, par rapport à la seconde pièce, que les autres sondes, dont le plan est perpendiculaire à ladite direction (Oy), parcourue par un courant de contrôle de même valeur que celle du courant de contrôle des autres sondes, ledit capteur comprenant en outre un circuit élaborant un signal

$$S3 = (V1 + V2 - 2V3)/(V1 - V2)$$

où V1, V2 et V3 sont les tensions de Hall des première, deuxième et troisièmes sondes respectivement, le signal S3 étant proportionnel audit écart de position.

3. Capteur de position selon l'une des revendications 1 et 2 caractérisé en ce que lesdits moyens comprennent deux aimants (11, 12), disposés parallèlement entre eux, leur direction commune d'aimantation étant perpendiculaire à ladite direction (Oy).

4. Capteur selon l'une des revendications 1 à 3, caractérisé en ce que chaque sonde (14, 15, 16) est munie d'un circuit pour permettre à ladite sonde de travailler à champ nul.

5. Capteur selon la revendication 4, caractérisé en ce que ledit circuit comprend pour chacune (15) desdites sondes, une bobine (25) entourant ladite sonde et dont l'axe est perpendiculaire au plan de ladite sonde, ladite bobine étant parcourue par un courant IB proportionnel à la tension VH de Hall de ladite sonde, dans un sens tel que le champ qu'il produit soit de sens opposé au champ mesuré par ladite sonde, la mesure de la tension de Hall étant obtenue par la mesure du courant de la dite bobine.

## Patentansprüche

1. Stellungsgeber, der den Positionsabstand eines ersten Stücks, wie z.B. eines bestimmten Elements einer Eisenbahnwagenachse, in Bezug auf ein zweites, ortsfestes Stück, wie z.B. einer Schiene, auf der diese Wagenachse läuft, gemäß einer gegebenen Richtung messen soll, mit Mitteln, um oberhalb des zweiten Stücks ein Magnetfeld zu erzeugen, dessen Kraftlinien, wenn dieser Abstand null ist, im wesentlichen senkrecht zu dieser Richtung verlaufen, dadurch gekennzeichnet, daß er zwei Hallsonden (14, 15) aufweist, die fest mit dem ersten Stück verbunden sind und deren Ebenen senkrecht zu dieser Richtung (Oy) verlaufen, die einen festen Abstand (d) voneinander haben und die gleiche Höhe (ho) in Bezug auf das zweite Stück, und die von einem identischen Kontrollstrom durchflossen werden, wobei dieser Stellungsgeber weiter einen Kreis aufweist, der ein Signal

$$S1 = (V1 + V2)/(V1-V2)$$

erzeugt, wobei V1 und V2 die jeweilige Hallspannung dieser Sonden ist und das Signal S1 proportional zum Positionsabstand ist.

2. Stellungsgeber, der den Positionsabstand eines ersten Stücks, wie z.B. eines bestimmten Elements einer Eisenbahnwagenachse in Bezug auf ein zweites, ortsfestes Stück, wie z.B. einer Schiene, auf der diese Wagenachse läuft, gemäß einer gegebenen Richtung messen soll, mit Mitteln, um oberhalb des zweiten Stücks ein Magnetfeld zu erzeugen, dessen Kraftlinien, wenn dieser Abstand null ist, senkrecht zu dieser Richtung liegen, dadurch gekennzeichnet, daß er eine erste und eine zweite Hallsonde (14, 15), die fest mit dem ersten Stück verbunden sind und deren Ebenen senkrecht zu dieser Richtung (Oy) verlaufen, die einen festen Abstand (d) voneinander haben und die gleiche Höhe (ho) in Bezug auf das zweite Stück, und die von einem identischen Kontrollstrom durchflossen werden, und eine dritte Hallsonde (16) aufweist, die fest mit dem ersten Stück verbunden ist und sich außerhalb der Wirkung des Magnetfelds befindet, in gleicher Höhe in Bezug auf das zweite Stück wie die anderen Sonden, wobei die Ebene dieser dritten Hallsonde senkrecht zu dieser Richtung (Oy) verläuft und diese Sonde von einem Kontrollstrom des gleichen Werts wie der Kontrollstrom der anderen Sonden durchflossen wird, wobei dieser Stellungsgeber weiter einen Kreis aufweist, der ein Signal

$$S3 = (V1 + V2 - 2V3)/(V1-V2)$$

erzeugt, wobei V1, V2 und V3 die Hallspannungen der ersten bzw. zweiten bzw. dritten Sonde sind und das Signal S3 proportional zum Positionsabstand ist.

3. Stellungsgeber nach einem der Ansprüche 1 und 2, dadurch gekennzeichnet, daß die Mittel zwei Magnete aufweisen, die parallel zueinander angeordnet sind und deren gemeinsame Magnetrichtung senkrecht zur Richtung (Oy) liegt.

4. Stellungsgeber nach einem der Ansprüche 1 bis 3, dadurch gekennzeichnet, daß jede Sonde (14, 15, 16) mit einem Schaltkreis versehen ist, um es dieser Sonde zu ermöglichen, mit Feld Null zu arbeiten.

5. Stellungsgeber nach Anspruch 4, dadurch gekennzeichnet, daß dieser Schaltkreis für jede dieser Sonden (15) eine Wicklung (25) aufweist, die diese Sonde umgibt und deren Achse senkrecht zur Ebene dieser Sonde liegt, wobei diese Wicklung von einem Strom IB durchflossen wird, der proportional zur Hall-Spannung VH dieser Sonde ist und in einer solchen Richtung fließt, daß das von ihm erzeugte Feld in Gegenrichtung zum von dieser Sonde gemessenen Feld liegt, wobei die Messung der Hall-Spannung durch die Messung des Stroms dieser Wicklung erhalten wird.

## Claims

1. A position sensor for measuring the separation, in a given direction, between a first part such as a given element of a railway vehicle axle and a stationary second part such as a rail on which said axle runs, said sensor including means for producing a magnetic field above said second part, the lines of that field being substantially perpendicular to said direction when said separation is zero, characterized in that it includes two Hall effect probes (14, 15) secured to said first part with their planes perpendicular to said direction (Oy) at a fixed distance (d) from each other and at the same height (ho) with respect to said second part, and conveying identical control currents, said sensor also including a circuit producing a signal

$$S1 = (V1 + V2)/(V1 - V2)$$

where V1 and V2 are the respective Hall voltages of said probes, said signal S1 being proportional to said separation.

2. A position sensor for measuring the separation, in a given direction, between a first part such as a given element of a railway vehicle axle and a stationary second part such as a rail on which said axle runs, said sensor including means for producing a magnetic field above said second part, the lines of that field being substantially perpendicular to said direction when said separation is zero, characterized in that it includes first and second Hall effect probes (14, 15) secured to the first part with their planes perpendicular to said direction (Oy) at a fixed distance (d) from each other and at the same height (ho) with respect to said second part, and conveying identical control currents, and a third Hall effect probe (16) secured to said first part and placed outside the influence of said magnetic field, said third probe being at the same height relative to the second part as the other probes and having its plane perpendicular to said direction (Oy), and conveying a control current of the same value as the control currents supplied to the other probes, said sensor also including a circuit producing a signal

$$S3 = (V1 + V2 + 2V3)/(V1 - V2)$$

where V1, V2, and V3 are the Hall voltages of the first, second and third probes respectively, said signal S3 being proportional to said separation.

3. A position sensor according to claim 1 or 2, characterized in that said means comprise two magnets (11, 12) arranged parallel to each other and having a common direction of magnetization which is perpendicular to said direction (Oy).

4. A sensor according to any one of claims 1 to 3, characterized in that each of said probes (14, 15, 16) is provided with a circuit which allows said probe to operate at zero field.

5. A sensor according to claim 4, characterized in that said circuit includes for each of said probes (15) a coil (25) surrounding said probe, the axis of said coil being perpendicular to the plane of said probe, said coil conveying a current IB proportional to the Hall voltage VH of said probe, the direction of said current being such that the field produced by it opposes the field measured by said probe, the value of the Hall voltage being obtained by measurement of the current in said coil.

## FIG.1

## FIG.2

# FIG. 3

FIG. 4

FIG. 5

FIG. 6

# FIG. 7

FIG.8

N

S

11

15

14

N

S

12

z

y

o

x

10

FIG.9

z

12

N

S

N

S

11

14

15

o

y

10

FIG.10

z

N

S

11

15

10

o

x

# FIG.11

# FIG.12